# EUROPEAN PATENT APPLICATION

(11) **EP 4 502 527 A1**
(43) Date of publication of application: **05.02.2025**
(21) Application number: 24191285.6
(22) Date of filing: 26.07.2024
(51) Int. Cl.: F28F 21/04, F28F 21/08, F28D 20/02

(54) **LATENT HEAT STORAGE UNIT**

(30) Priority: 31.07.2023 JP 2023124118
(71) Applicant: SHINKO ELECTRIC INDUSTRIES CO., LTD., Nagano-shi, Nagano 381-2287 (JP)
(72) Inventor: HORIUCHI, Michio, Nagano 381-2287 (JP)
(74) Representative: Regimbeau

(57) **Abstract**

A latent heat storage unit includes a ceramic part made of a polycrystalline body and having a closed space formed therein and a metal part provided in the closed space and containing 50% or more silicon by mass.

## Description

### FIELD

The present disclosure relates to latent heat storage units and methods of making a latent heat storage unit.

### BACKGROUND

In the related art, a latent heat storage unit has been proposed that utilizes an Al-Si alloy or the like as a phase change material (PCM) with a protective layer enclosing the PCM.

In recent years, there has been an increasing demand for the storage of larger latent heat.

There may be a need to provide a latent heat storage unit having a larger latent heat storage capacity and a method making such a latent heat storage unit.

### [Prior art literature]

### [Patent literature]

[Patent Document 1] Japanese Laid-Open Patent Publication No. 2021-031507
[Patent Document 2] Japanese Laid-Open Patent Publication No. 2015-048393

### SUMMARY

According to an aspect of the embodiment, a latent heat storage unit includes a ceramic part made of a polycrystalline body and having a closed space formed therein and a metal part provided in the closed space and containing 50% or more silicon by mass.

### BRIEF DESCRIPTION OF DRAWINGS

FIGS. 1A and 1B are drawings illustrating a latent heat storage unit according to a first embodiment;
FIGS. 2A and 2B are drawings illustrating a method of making the latent heat storage unit according to the first embodiment;
FIGS. 3A and 3B are drawings illustrating a latent heat storage unit according to a second embodiment;
FIGS. 4A and 4B are drawings illustrating a latent heat storage unit according to a third embodiment;
FIGS. 5A through 5C are drawings illustrating a method of making the latent heat storage unit according to the third embodiment;
FIGS. 6A through 6C are drawings illustrating a method of making the latent heat storage unit according to the second embodiment;
FIG. 7 is an axonometric view illustrating a latent heat storage unit according to a fourth embodiment; and
FIGS. 8A through 8C are cross-sectional views illustrating an experimental method of making a latent heat storage unit.

### DESCRIPTION OF EMBODIMENTS

In the following, embodiments will be described with reference to the accompanying drawings. In this specification and the drawings, elements having substantially the same functional configuration may be referred to by the same reference numerals, and a duplicate description thereof may be omitted.

### <First Embodiment>

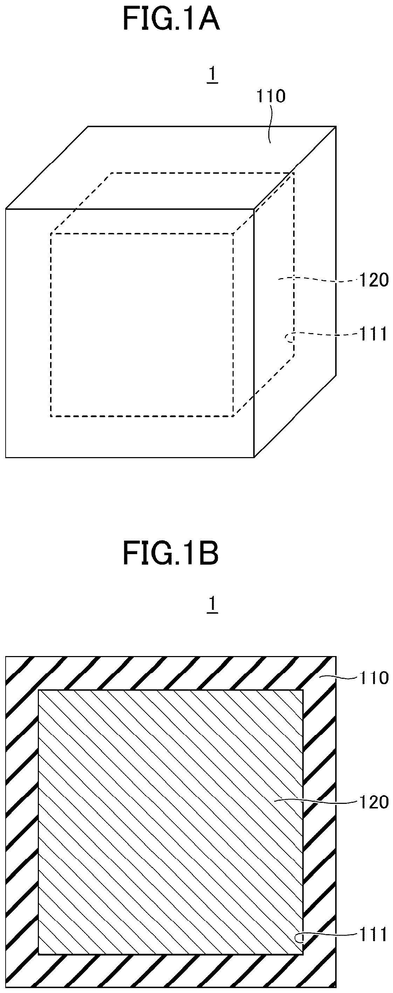

The following paragraphs will describe a first embodiment. The first embodiment relates to a latent heat storage unit. FIGS. 1A and 1B are drawings illustrating a latent heat storage unit according to the first embodiment. FIG. 1A is a perspective view, and FIG. 1B is a cross-sectional view.

As illustrated in FIG. 1A and FIG. 1B, the latent heat storage unit 1 according to the first embodiment includes a ceramic part 110 made of a polycrystalline body and a metal part 120.

A closed space 111 is formed in the ceramic part 110. The ceramic part 110 and the closed space 111 have a rectangular parallelepiped shape. The ceramic part 110 may have a seamless structure. The ceramic part 110 has no joint section extending to the closed space 111, for example. The ceramic part 110 contains, for example, mullite (3Al₂O₃·2SiO₂), aluminum oxide (Al₂O₃), cordierite (2MgO·2Al₂O₃·5SiO₂), anorthite (CaAl₂Si₂O₈), sillimanite (Al₂SiO₅), silicon nitride (Si₃N₄), boron nitride (BN), aluminum nitride (AlN), a composite material of aluminum nitride and boron nitride (i.e., composite ceramic), silicon carbide (SiC), tungsten carbide (WC), boron carbide (B₄C), molybdenum disilicide (MoSi₂), tungsten disilicide (WSi₂), or any combination thereof. The ceramic part 110 may be made of mullite, aluminum oxide, cordierite, anorthite, sillimanite, silicon nitride, boron nitride, aluminum nitride, aluminum nitride and boron nitride composites, silicon carbide, tungsten carbide, boron carbide, molybdenum disilicide, tungsten disilicide, or any combination thereof.

The metal part 120 is provided in the closed space 111. In other words, the metal part 120 is encapsulated in the ceramic part 110. It can also be said that the metal part 120 is airtightly covered by the ceramic part 110, which has a continuous structure throughout. The metal part 120 contains silicon (Si). For example, the main component of the metal part 120 is silicon. The metal part 120 contains 50% or more silicon by mass, for example. The metal part 120 may be made of silicon having a purity of 50 mass% or more. Preferably, the metal part 120 contains 99% or more silicon by mass, or is made of silicon having a purity of 99 mass% or more. The metal part 120 may contain boron (B), aluminum (Al), bismuth (Bi), antimony (Sb), gallium (Ga), copper (Cu), iron (Fe), titanium (Ti), yttrium (Y), indium (In), zinc (Zn), tin (Sn), or any combination thereof in a total ratio of less than 50 mass%.

When the metal part 120 is composed of 92% Si by mass and 8% B by mass, for example, the phase change temperature of the metal part 120 is 1385 °C. When the metal part 120 is composed of 85% Si by mass and 15% Ti by mass, the phase change temperature of the metal part 120 is 1330 °C. When the metal part 120 is composed of 88% Si by mass and 12% Y by mass, the phase change temperature of the metal part 120 is 1200 °C. When the metal part 120 is composed of 99% Si by mass and 1% Fe by mass, the phase change temperature of the metal part 120 is about 1200 °C. When the metal part 120 is composed of 80% Si by mass and 20% Al by mass or 80% Si by mass and 20% Cu by mass, the phase change temperature of the metal part 120 is about 1300 °C.

The volume of the closed space 111 may be equal to the volume of the metal part 120 or greater than the volume of the metal part 120.

The melting point of silicon is 1414 °C. When the main component of the metal part 120 is silicon, a phase change between the solid and the liquid occurs at about 1414 °C. Around this temperature, the ceramic part 110 made of a polycrystalline body is chemically stable. Because of this, regardless of whether the metal part 120 is solid or liquid, the ceramic part 110 is capable of confining the metal part 120 in the closed space 111. Furthermore, even when used at high temperatures, chemical changes such as oxidation are not likely to occur in the ceramic part 110. The melting point of the metal part 120 is, for example, 1100 °C or higher. The melting point of the metal part 120 is preferably 1200 °C or higher, more preferably 1300 °C or higher, and yet more preferably 1350 °C or higher. When the metal part 120 contains boron or the like in addition to silicon, it may suffice for the melting point of the metal part 120 to be lower than 1414 °C. The melting point of the metal part 120 may be measured by differential thermal analysis (DTA) or differential scanning calorimetry (DSC), for example.

In the latent heat storage unit 1, since the metal part 120 functions as a phase change material (PCM) and the metal part 120 contains 50% or more silicon by mass, the phase change temperature of the metal part 120 between the solid and liquid is high, which allows larger latent heat to be stored. The latent heat stored in the latent heat storage unit 1 may be used for direct power generation by thermophotovoltaic (TPV), for example.

Even if the latent heat storage unit 1 is used at a high temperature, the ceramic part 110 is not likely to undergo oxidation or other alteration. This serves to improve the stability. Therefore, an oxidizing material such as air can be used as a heat medium, which allows the selection range of the heat medium to be expanded.

Further, it is easy to clean the surface of the latent heat storage unit 1. In the case where the heat medium is an exhaust gas from a combustion furnace containing unburned components, for example, the heat medium may contain a substance such as soot that is likely to adhere to the latent heat storage unit 1. Adhesion of such a substance may lead to the risk of a decrease in thermal conductivity and an increase in flow resistance. In the latent heat storage unit 1, however, the adhering substance may be easily removed by high-temperature treatment in the atmosphere or the like. When the adhering substance is non-organic, it can be removed by acid washing or the like.

The density of solid silicon at around room temperature is 2.3290 g/cm³, and the density of liquid silicon at around the melting point is 2.57 g/cm³. As is indicated by these numbers, the volume change associated with the phase change of silicon is small.

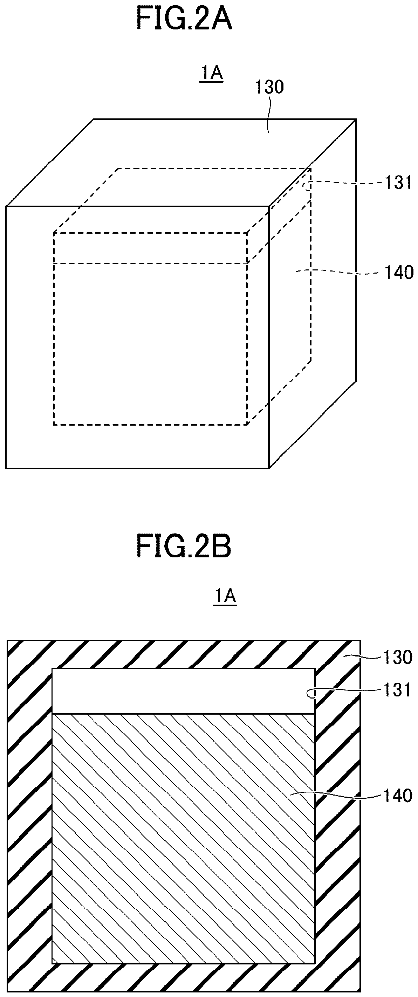

In the following, a method of making the latent heat storage unit 1 according to the first embodiment will be described. FIGS. 2A and 2B are drawings illustrating the method of making the latent heat storage unit 1 according to the first embodiment. FIG. 2A is a perspective view, and FIG. 2B is a cross-sectional view.

First, as illustrated in FIGS. 2A and 2B, a composite 1A composed of an unfired ceramic part 130 and a metal part 140 is prepared. The metal part 140 is covered with the ceramic part 130. The ceramic part 130 will become the ceramic part 110, and the metal part 140 will become the metal part 120.

The ceramic part 130 is, for example, a green sheet laminate, a slip casting body, a gel casting body, or a cold isostatic pressing (CIP) molded body obtained by preforming a granulated powder, any of which include the material of the ceramic part 110. The ceramic part 130 contains, for example, mullite, aluminum oxide, cordierite, anorthite, sillimanite, silicon nitride, boron nitride, aluminum nitride, a composite of aluminum nitride and boron nitride, silicon carbide, tungsten carbide, boron carbide, molybdenum disilicide, tungsten disilicide, or any combination thereof. The ceramic part 130 may also contain a sintering aid or the like. The ceramic part 130 preferably contains mullite, aluminum oxide, cordierite, anorthite, sillimanite, silicon nitride, boron nitride, aluminum nitride, a composite of aluminum nitride and boron nitride, silicon carbide, tungsten carbide, boron carbide, molybdenum disilicide, tungsten disilicide, or any combination thereof in a ratio of 99% or more by mass. The grain size of the ceramic grains included in the ceramic part 130 is preferably 3 um or less and more preferably 1 um or less.

The metal part 140 is, for example, a wire material, a column material, a paste, a slip casting body, a gel casting body, or a CIP molded body made by preforming a granulated powder, any of which contains silicon. The metal part 140 contains, for example, 99% or more silicon by mass.

A closed space 131 is formed in the ceramic part 130, and the metal part 140 is provided in the closed space 131. The metal part 140 may be a lump or a powder. The bulk of the metal part 140 is preferably adjusted such that the volume of the metal part 120 and the volume of the closed space 111 of the ceramic part 110 are almost the same in the latent heat storage unit 1, by factoring in the shrinkage of the ceramic part 130 during firing.

Subsequently, the ceramic part 130 and the metal part 140 are fired simultaneously. As a result, the ceramic part 110 is formed from the ceramic part 130, and the metal part 120 is formed from the metal part 140 (see FIGS. 1A and 1B). At this time, the ceramic part 130, which is a porous body, undergoes an increase in density, so that the relative density of the ceramic part 110 made of the polycrystalline body becomes about 95% to 99%. On the other hand, the metal part 140 hardly becomes denser when made of a wire material or a column material, and the relative density of the metal part 120 is about 100%. Therefore, it is preferable to determine the relative density of the ceramic part 130 and the metal part 140 by considering the difference in the change of the relative density due to firing. In the present disclosure, the expression "fired simultaneously" may sometimes be used by assuming that the metal part is fired even when the metal part undergoes no change in the components or property other than a phase change upon being fired. The relative density refers to the density of a thing relative to the density of that thing that is completely solid. In other words, the relative density refers to the ratio of the density of an object to the density of the object having no voids or defects whatsoever.

The temperature of the simultaneous firing is determined such as to create a condition in which the obtained ceramic part 110 reaches a relative density that does not contain any continuous pores (i.e., voids connected from the inside to the surface), more specifically, a relative density of about 90% or more. The temperature depends on the type and composition of the ceramic, but it is desirable to set the temperature to be at least 50 °C higher, and preferably at least 300 °C higher, than the melting point of the metal part 140. The rate of temperature rise during the simultaneous firing is adjusted according to the densifiable rate depending on the type and composition of the ceramic and the size (thickness, etc.) of a fired object determined by design, and the rate is preferably set high to the extent possible. The atmosphere of simultaneous firing is, for example, a reducing atmosphere containing a reducing gas such as hydrogen, a non-oxidizing atmosphere containing a non-oxidizing gas such as nitrogen, or an oxidizing atmosphere containing an oxidizing gas such as air, depending on the nature of the material of the ceramic part 130. When simultaneous firing is performed in an oxidizing atmosphere, an oxide film existing on the surface of the metal material constituting the metal part 140 may remain in the metal part 120. Even in this case, the oxide film may be left to remain in the metal part 120 since a sufficient heat capacity accompanying a phase change is provided.

The above-described method allows for the successful production of the latent heat storage unit 1 according to the first embodiment.

According to this manufacturing method, the metal part 120 is encapsulated by the ceramic part 110. In other words, the metal part 120 is airtightly covered by the ceramic part 110 which has a continuous structure throughout.

The material of the ceramic part 110 will now be described in detail.

Mullite, which is an example of the material of the ceramic part 110, can be sintered at around 1600 °C, and does not react with silicon in an atmosphere, a neutral atmosphere, or a reducing atmosphere. Although the material of the ceramic part 110 may be pure mullite, the densification temperature can be reduced by adding a sintering aid. Oxides of group 2 and group 3 elements are effective as sintering aids, and magnesium oxide (MgO), calcium oxide (CaO), yttrium oxide (Y₂O₃), and lanthanum oxide (La₂O₃) have been confirmed to possess an intended effect. Yttrium oxide is particularly preferable in terms of its effectiveness and ease of handling of raw materials.

Aluminum oxide, an example of a material for ceramic part 110, is a relatively inexpensive material. However, under an atmosphere containing oxygen, a complex oxide containing silicon is likely to be formed, which gives rise to the risk of consumption of silicon contained in the metal part 120. For this reason, it is preferable to use a non-oxidizing atmosphere at the time of simultaneous firing. At the time of using the latent heat storage unit 1 also, the atmosphere is preferably a non-oxidizing atmosphere.

Nitride is an example of a material of the ceramic part 110. Examples of nitride include silicon nitride, boron nitride, aluminum nitride, and a composite material of aluminum nitride and boron nitride. Hexagonal boron nitride and a composite material of aluminum nitride and boron nitride (i.e., composite ceramic) are easy to machine after sintering. The composite material of aluminum nitride and boron nitride can provide higher mechanical strength than hexagonal boron nitride. The ratio of aluminum nitride and boron nitride in the composite material of aluminum nitride and boron nitride is not limited, but preferably both are 50% by mass. When the main component of the ceramic part 110 is the composite material of aluminum nitride and boron nitride, yttrium oxide and calcium carbonate are preferably used as sintering aids.

One example of the material of the ceramic part 110 is carbide. Examples of carbide include silicon carbide, tungsten carbide, and boron carbide. Silicon carbide, tungsten carbide, and boron carbide have electrical conductivity depending on the content of carbon. Silicon carbide, tungsten carbide, and boron carbide are materials that generate heat when energized. Silicon carbide, tungsten carbide, and boron carbide can be used as heaters. When the ceramic part 110 contains silicon carbide, tungsten carbide, or boron carbide, the ceramic part 110 has the functions to protect and heat the metal part 120, and readily realizes a higher heat storage density. In addition, the ceramic part 110 containing silicon carbide, tungsten carbide, or boron carbide serves to achieve the size reduction of a system when using an electric thermal energy storage (ETES) system that stores heat by directly utilizing surplus electric power. Although silicon carbide can be sintered at ambient pressure, sintering by a hot-pressing method is preferable in order to obtain the ceramic part 110 with higher density and thermal conductivity. Although sintering by a hot-pressing method is unlikely to generate a gap between the metal part 120 and the ceramic part 110, the metal part 120 which is mainly composed of silicon does not increase in volume upon liquefaction, and, thus, such a gap does not need to be formed.

An example of a material of the ceramic part 110 is a silicide. Examples of silicide include molybdenum disilicide (MoSi₂) and tungsten disilicide (WSi₂). Molybdenum disilicide and tungsten disilicide are materials that generate heat when energized. Molybdenum disilicide and tungsten disilicide can be stably used as heaters in the atmosphere in the temperature range including the phase change temperature of silicon (1414 °C) . When the ceramic part 110 includes molybdenum disilicide or tungsten disilicide, the ceramic part 110 has the functions to protect and heat the metal part 120, and readily realizes a higher heat storage density. In addition, a dense oxide film of silicon dioxide (SiO₂) is formed in the atmosphere on the surface of molybdenum disilicide and tungsten disilicide, which suppresses oxidation inside the molybdenum disilicide and tungsten disilicide. Because of this, the ceramic part 110 containing molybdenum disilicide or tungsten disilicide is chemically stable even in the atmosphere.

To obtain a sintered body of molybdenum disilicide, for example, an additive such as a kaolinite (Al₄Si₄O₁₀(OH)₈)-based additive or a montmorillonite ((Na, Ca)_{0.33}(Al, Mg)₂Si₄O₁₀(OH)₂)-based additive up to about 20% by mass is added to the powder of molybdenum disilicide, and a slurry of an aqueous system or a (polar) solvent system is used. Based on this slurry, a green body is formed, and firing is performed at about 1550 °C in a non-oxidizing atmosphere such as a nitrogen atmosphere or a hydrogen-containing nitrogen atmosphere.

From the viewpoint of raw material cost, manufacturing equipment, and the difficulty and cost of manufacturing, mullite is most preferable as a material of the ceramic part 110.

### <Second Embodiment>

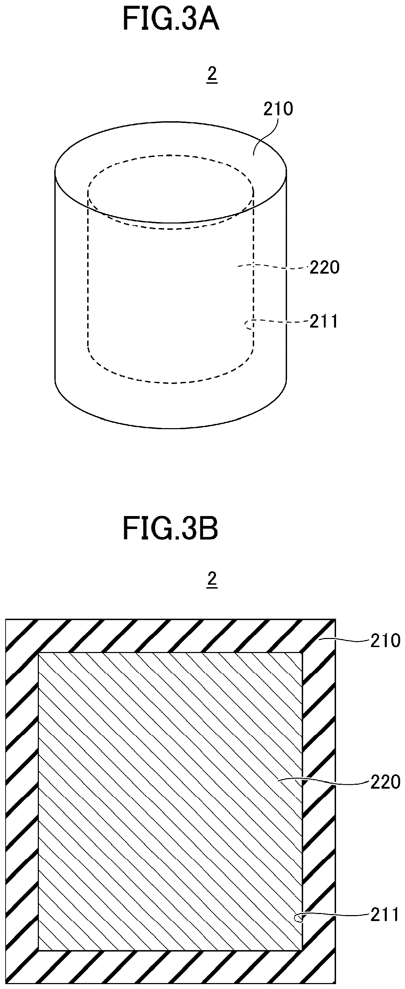

A second embodiment will be described below. The second embodiment is directed to a latent heat storage unit. FIGS. 3A and 3B are drawings illustrating the latent heat storage unit according to the second embodiment. FIG. 3A is a perspective view, and FIG. 3B is a cross-sectional view.

As illustrated in FIGS. 3A and 3B, a latent heat storage unit 2 according to the second embodiment includes a ceramic part 210 made of a polycrystalline body and a metal part 220.

A closed space 211 is formed in the ceramic part 210. The shape of the ceramic part 210 and the closed space 211 is cylindrical. The ceramic part 210 has a seamless structure, for example. For example, the ceramic part 210 has no joint section extending to the closed space 211. The ceramic part 210 is made of substantially the same material as the ceramic part 110.

The metal part 220 is provided in the closed space 211. In other words, the metal part 220 is encapsulated in the ceramic part 210. It can also be said that the metal part 220 is airtightly covered by the ceramic part 210 which has a continuous structure throughout. The metal part 220 is made of the same material as the metal part 120.

The volume of the closed space 211 may be equal to the volume of the metal part 220 or greater than the volume of the metal part 220.

Other configurations are the same as those of the first embodiment. The latent heat storage unit 2 according to the second embodiment may be manufactured by the same method as that of the first embodiment except for the shape.

The second embodiment provides the same advantageous effects as those of the first embodiment. Further, since the external stress to the ceramic part 210 is easily dispersed, higher durability can be obtained.

The shape of the latent heat storage unit may alternatively be spherical or prismatic.

### <Third Embodiment>

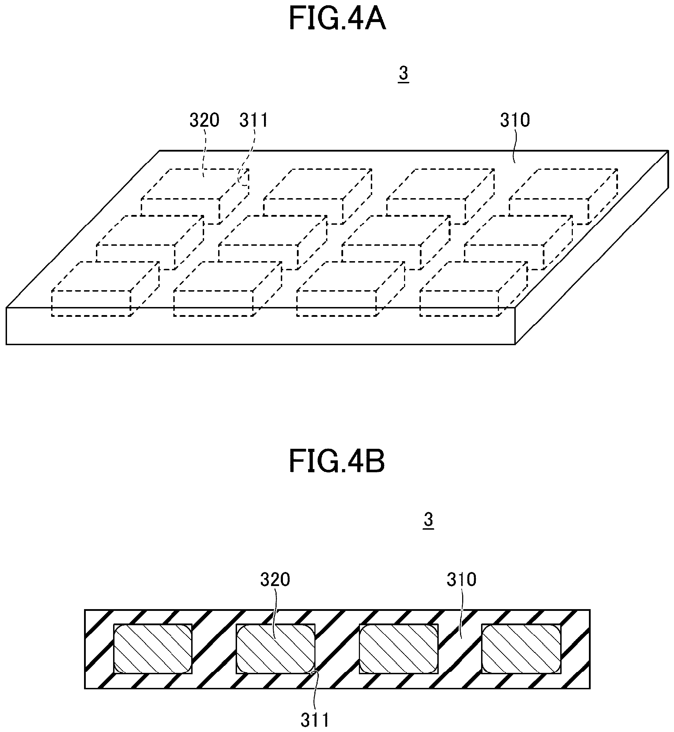

A third embodiment will be described below. The third embodiment is related to a latent heat storage unit. FIG. 4 is a drawing illustrating a latent heat storage unit according to the third embodiment. FIG. 4A is a perspective view, and FIG. 4B is a cross-sectional view.

As illustrated in FIGS. 4A and 4B, a latent heat storage unit 3 according to the third embodiment includes a ceramic part 310 made of a polycrystalline body and a plurality of metal parts 320.

A plurality of closed spaces 311 are formed in the ceramic part 310. The shapes of the ceramic part 310 and the closed spaces 311 are rectangular parallelepiped. The ceramic part 310 has a seamless structure, for example. For example, the ceramic part 310 has no joint section extending to the closed spaces 311. The ceramic part 310 is made of the same material as the ceramic part 110. The closed spaces 311 are evenly spaced in two directions orthogonal to each other in a plane parallel to a pair of parallel faces of the ceramic part 310.

The metal parts 320 are provided in one-to-one correspondence in the closed spaces 311. In other words, the metal parts 320 are encapsulated in the ceramic part 310. It can also be said that the metal parts 320 are airtightly covered by the ceramic part 310 which has a continuous structure throughout. The metal parts 320 are made of the same material as the metal part 120.

The volume of each of the closed spaces 311 may be equal to the volume of a corresponding one of the metal parts 320 or greater than the volume of a corresponding one of the metal parts 320.

Other configurations are the same as those of the first embodiment.

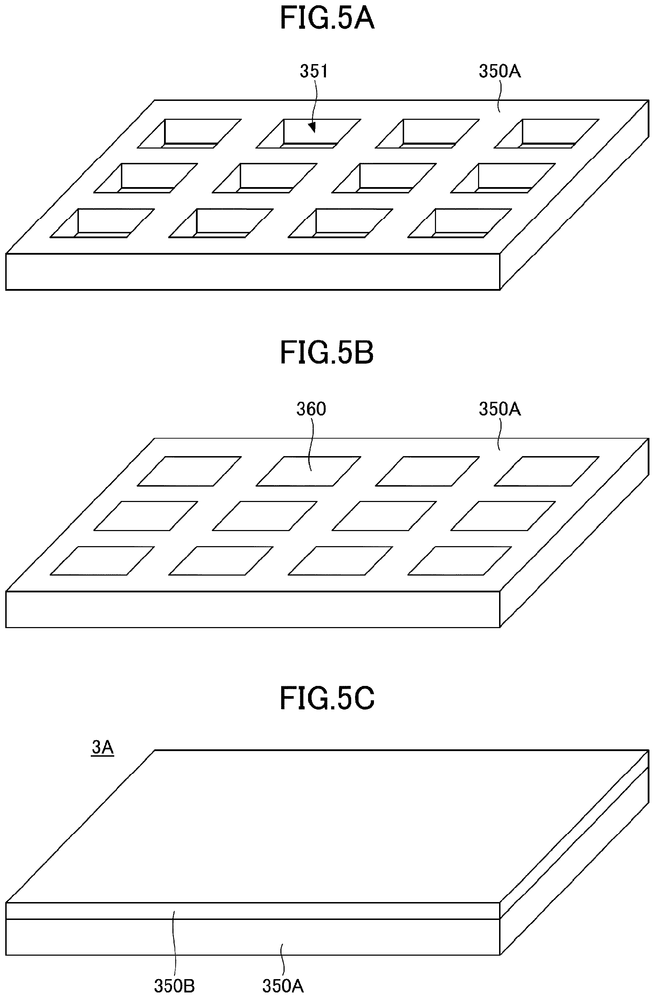

In the following, a method of making the latent heat storage unit 3 according to the third embodiment will be described. FIGS. 5A through 5C are drawings illustrating the method of making the latent heat storage unit 3 according to the third embodiment.

First, as illustrated in FIG. 5A, an unfired ceramic part 350A having a plurality of cavities 351 to become the closed spaces 311 is prepared. The ceramic part 350A is, for example, a laminate of green sheets. The ceramic part 350A may be formed by injection molding or the like. The ceramic part 350A will become part of the ceramic part 310 in the end.

The preparation of the unfired ceramic part 350A includes, for example, the following processes. First, a ceramic slurry is prepared by ball milling or the like, and a plurality of green sheets are formed by a doctor blade method or the like. Then, through holes corresponding to the closed spaces 331 are formed in the green sheets by punching or the like. A green sheet without through holes is also prepared. The green sheets with the through holes formed therein are laminated on the green sheet without through holes formed therein.

Next, as illustrated in FIG. 5B, metal parts 360 are provided in one-to-one correspondence in the cavities 351. The metal parts 360 will become the metal parts 320 in the end. The metal parts 360 are, for example, a paste, beads, a winding, or a sheet.

Then, as illustrated in FIG. 5C, a sheet ceramic part 350B is disposed on the ceramic part 350A to close the cavities 351. The ceramic part 350B will becomes part of the ceramic part 310. As the sheet ceramic part 350B, a green sheet without through holes may be used.

In this manner, a composite 3A composed of the unfired ceramic parts 350A and 350B and the metal parts 360 is obtained.

Subsequently, the ceramic parts 350A and 350B and the metal parts 360 are fired simultaneously. As a result, the ceramic part 310 is formed from the ceramic parts 350A and 350B, and the metal parts 320 are formed from the metal parts 360 (see FIGS. 4A and 4B) .

The above-described method allows for the successful manufacture of the latent heat storage unit 3 according to the third embodiment.

The third embodiment provides the same advantageous effects as those of the first embodiment.

It is also possible to divide the composite 3A into metal parts 360 before firing the composite 3A. This arrangement enables the production of the latent heat storage units 1 according to the first embodiment.

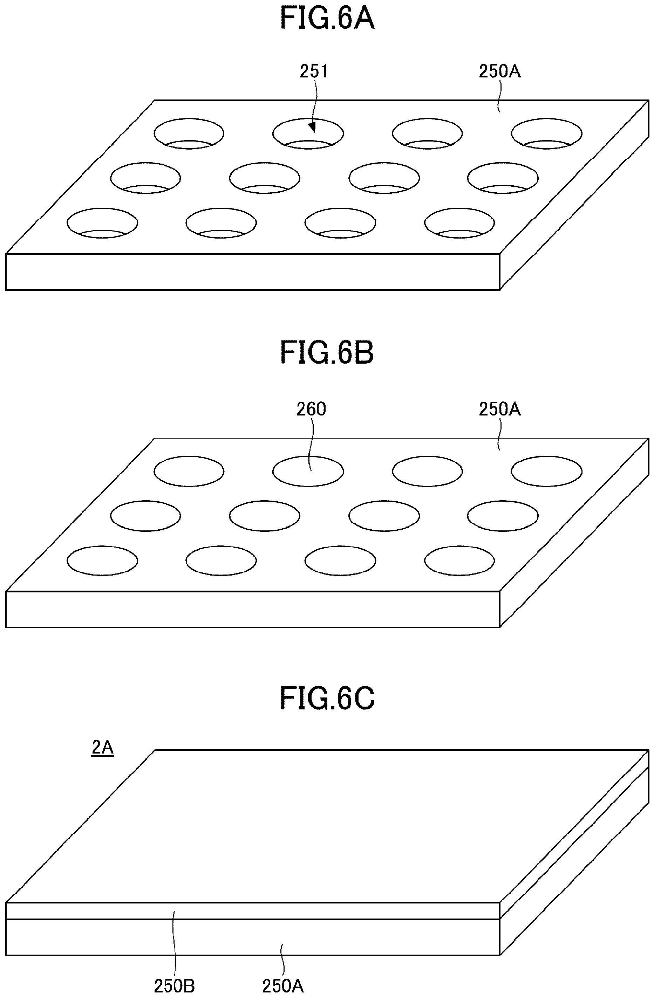

Substantially the same method can also be utilized to manufacture the latent heat storage unit 2 according to the second embodiment. FIGS. 6A through 6C are drawings illustrating a method of making the latent heat storage unit 2 according to the second embodiment.

First, as illustrated in FIG. 6A, an unfired ceramic part 250A having a plurality of cavities 251 each forming the closed space 211 is prepared.

Next, as illustrated in FIG. 6B, a metal part 260 is provided in each cavity 251.

Then, as illustrated in FIG. 6C, a composite 2A is obtained by placing a sheet ceramic part 250B on the ceramic part 250A to close the cavities 251.

Thereafter, the composite 2A is divided into pieces each having a respective metal part 260. The ceramic parts 250A and 250B and the metal parts 260 are then fired simultaneously.

The method described above also enables the efficient manufacture of the latent heat storage unit 2 according to the second embodiment.

The composite for producing a latent heat storage unit may be produced by a dip coating method using a ceramic slurry or the like.

### <Fourth Embodiment>

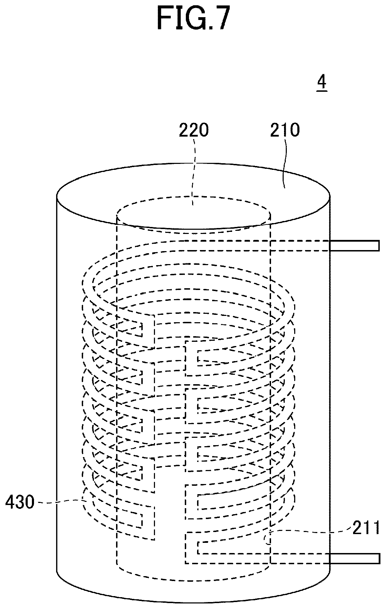

A fourth embodiment will be described below. The fourth embodiment is directed to a latent heat storage unit. FIG. 7 is an axonometric view illustrating the latent heat storage unit according to the fourth embodiment.

As illustrated in FIG. 7, a latent heat storage unit 4 according to the fourth embodiment includes a ceramic part 210 made of a polycrystalline body, a metal part 220, and an electric heating element 430 capable of heating the metal part 220. The electric heating element 430 is provided in the ceramic part 210. The electric heating element 430 is provided between the surface of the ceramic part 210 and the surface of the metal part 220. The electric heating element 430, upon being wound, forms a substantially cylindrical shape. When viewed in a direction parallel to the long axis of the columnar metal part 220, the electric heating element 430 alternates clockwise winding and counterclockwise winding to be wound on the lateral surface of a cylinder, for example. The electric heating element 430 contains, for example, tungsten or molybdenum or both. The electric heating element 430 may contain a mixture of tungsten and aluminum oxide or a mixture of molybdenum and aluminum oxide. In this case, the electric heating element 430 may further contain one or more of silicon oxide, magnesium oxide, calcium carbonate, etc. The electric heating element 430 is an example of a heater.

Other configurations of the fourth embodiment are the same as those of the second embodiment.

In manufacturing the latent heat storage unit 4 according to the fourth embodiment, for example, aluminum oxide powder is mixed with tungsten or molybdenum powder, and organic components such as a solvent and a binder are added to prepare a resistor paste. Portions (circumferential portions) of the electric heating element 430, specifically the portions that are perpendicular to the long axis of the metal part 220, may be formed by, for example, the resistor paste printed on the surfaces of ceramic green sheets. Portions of the electric heating element 430, which portions extend parallel to the long axis of the metal part 220, may be formed by, for example, the resistor paste filling through holes that are formed through the ceramic green sheets. The resistivity of the electric heating element 430 may be adjusted according to the proportion of aluminum oxide. One or more of silicon oxide, magnesium oxide, calcium carbonate, or the like may be added to the resistor paste. These inorganic components allow for the formation of a liquid phase or a complex oxide phase during firing, thereby improving the adhesion strength of the electric heating element 430 to the ceramic part 230 and improving the stability of the resistivity.

The fourth embodiment provides the same effects as those of the second embodiment. Since the electric heating element 430 is capable of heating the metal part 220, the electric energy applied from the outside can be converted into heat and stored in the latent heat storage unit 4. For example, utilizing the electric heating element 430 to generate heat by excess electric power allows the excess electric power to be stored as heat. The energy accumulated in the latent heat storage unit 4 may be supplied to a factory, office or commercial building as energy in the form of heat, steam (pressure), or electric power (through turbine power generation by steam pressure, or the like).

The inclusion of the electric heating element 430 in the latent heat storage unit 4 enables the reduction of energy loss. For example, when the electric heating element and the latent heat storage unit are separated, transfer of generated heat from the electric heating element to the latent heat storage unit requires the use of hot air currents or the like, which is likely to cause energy loss. This embodiment, however, allows for the reduction of such energy loss.

### <Experimental Example>

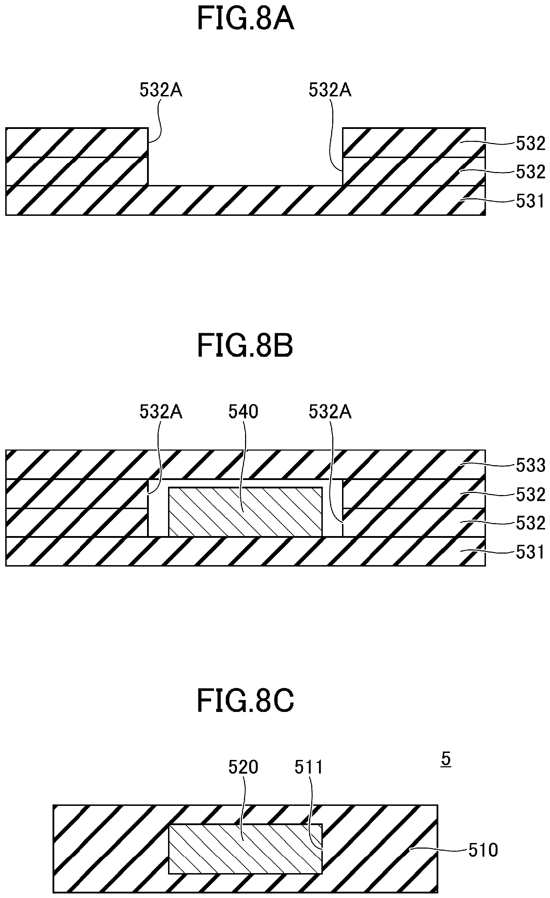

In the following, experiments conducted by the inventor of the present invention will be described. FIGS. 8A through 8C are cross-sectional views illustrating a method of making a latent heat storage unit performed as experiments.

In the first experiment, a polyvinyl butyral binder, a phthalate-based plasticizer and an alcohol-based solvent were added to mullite powder, and the resultant substance was pulverized and mixed by a ball milling method to produce a slurry. The slurry was then subjected to vacuum defoaming and viscosity adjustment, and four green sheets having a thickness of about 0.5 mm were made by a doctor blade method.

As illustrated in FIG. 8A, through holes 532A having an opening shape determined based on the volume after firing-induced shrinkage were formed through two green sheets 532. The two green sheets 532 were laminated on a green sheet 531 having no through holes formed therein.

As illustrated in FIG. 8B, a silicon strip 540 cut from a silicon substrate was housed in through holes 532A, followed by laminating a green sheet 533 having no through holes formed therein on the two green sheets 532. The proportion of silicon in the silicon strip 540 was 99% or more by mass.

The structure illustrated in FIG. 8B was then fired at 1600 degrees Celsius for two hours in an atmospheric atmosphere. This resulted in the production of, as illustrated in FIG. 8C, a latent heat storage unit 5 including a ceramic part 510 made of a polycrystalline body with a closed space 511 formed therein and a metal part 520 provided in the closed space 511.

Subsequently, the latent heat storage unit 5 was cut in such a way as to cut the metal part 520. The cut surface was polished and observed. The observation revealed that the metal part 520 exhibited a metallic luster, and the boundary between the ceramic part 510 and the metal part 520 was clear.

The resistance value of the metal part 520 was measured using a two-terminal tester, and the resistance value of the metal part 520 was about 40 kQ. In addition, the relative density of a ceramic material fired under the same conditions as the ceramic part 510 was about 90%.

In the second experiment, a polyvinyl butyral binder, a phthalate-based acid plasticizer, and an alcohol-based solvent was added to a mixture of mullite powder and yttrium oxide powder in which the content of yttrium oxide powder is 5% by mass, and the resultant substance is pulverized and mixed by ball milling to produce a slurry. The slurry was then subjected to vacuum defoaming and viscosity adjustment, and four green sheets with a thickness of about 0.5 mm were produced by a doctor blade method. Thereafter, the latent heat storage unit 5 was obtained in the same manner as in the first experiment. The yttrium oxide powder functions as a sintering aid.

Subsequently, the latent heat storage unit 5 was cut in such a way as to cut the metal part 520. The cut surface was polished and observed. The observation revealed that, as in the first experiment, the metal part 520 exhibited metallic luster, and the boundary between the ceramic part 510 and the metal part 520 was clear.

In addition, the microstructure and distribution of components of the latent heat storage unit 5 were inspected using a scanning electron microscope (SEM). The inspection revealed that the metal part 520 and the ceramic part 510 were closely bonded to each other. Further, none of oxygen, aluminum, and yttrium were detected in the metal part 520, and the metal part 520 was substantially composed of only silicon. Furthermore, silicon apparently originating from the silicon strip 540 was not detected in the ceramic part 510. In the ceramic part 510, aluminum, oxygen, and a relatively low level of silicon were detected, and almost no yttrium was detected. The relative density of the ceramic material fired under the same conditions as the ceramic part 510 (including yttrium oxide powder) was about 98%.

According to the present disclosure, at least one embodiment enables the storage of larger latent heat.

Although the preferred embodiments and the like have been described in detail above, the present disclosure is not limited to the above-described embodiments and the like, and various modifications and substitutions may be made to the above-described embodiments and the like without departing from the scope defined in the claims.

## Claims

1. A latent heat storage unit (1, 2, 3) comprising:
a ceramic part (110, 210, 310) made of a polycrystalline body and having a closed space (111, 211, 311) formed therein; and
a metal part (120, 220, 320) provided in the closed space (111, 211, 311) and containing 50% or more silicon by mass.

2. A latent heat storage unit (1, 2, 3) comprising:
a ceramic part (110, 210, 310) made of a polycrystalline body and having a closed space (111, 211, 311) formed therein; and
a metal part (120, 220, 320) provided in the closed space (111, 211, 311) and containing silicon;
wherein a melting point of the metal part (120, 220, 320) is 1100 °C or higher.

3. The latent heat storage unit (1, 2, 3) as claimed in claim 2, wherein the metal part (120, 220, 320) contains 50% or more silicon by mass.

4. The latent heat storage unit (1, 2, 3) as claimed in claim 1 or 2, wherein the metal part (120, 220, 320) contains 99% or more silicon by mass.

5. The latent heat storage unit (1, 2, 3) as claimed in claim 1 or 3, wherein the ceramic part (110, 210, 310) contains one or more selected from a group consisting of mullite, aluminum oxide, cordierite, anorthite, sillimanite, silicon nitride, boron nitride, aluminum nitride, a composite of aluminum nitride and boron nitride, silicon carbide, tungsten carbide, boron carbide, molybdenum disilicide, and tungsten disilicide.

6. The latent heat storage unit (1, 2, 3) as claimed in any one of claims 1 to 3, wherein the ceramic part (110, 210, 310) contains a material that generates heat when energized.

7. The latent heat storage unit (2) as claimed in any one of claims 1 to 3, further comprising a heater (430) configured to heat the metal part (220).

8. The latent heat storage unit (2) as claimed in claim 7, wherein the heater (430) is provided inside the ceramic part (210).

9. The latent heat storage unit (2) as claimed in claim 7, wherein the heater (430) contains tungsten, molybdenum, or both.

10. A method of making a latent heat storage unit (1, 2, 3), comprising:
preparing a composite composed of a metal part (140, 260, 360) containing 50% or more silicon by weight and an unfired ceramic part (130, 250A & 250B, 350A & 350B) having the metal part (140, 260, 360) housed therein; and
simultaneously firing the metal part (140, 260, 360) and the ceramic part (130, 250A & 250B, 350A & 350B).

11. A method of making a latent heat storage unit (1, 2, 3), comprising:
preparing a composite comprised of a metal part (140, 260, 360) containing silicon and an unfired ceramic part (130, 250A & 250B, 350A & 350B) having the metal part (140, 260, 360) housed therein; and
simultaneously firing the metal part (140, 260, 360) and the ceramic part (130, 250A & 250B, 350A & 350B),
wherein a melting point of the metal part (140, 260, 360) is 1100 °C or higher.

12. The method as claimed in claim 11, wherein the metal part (140, 260, 360) contains 50% or more silicon by mass.

13. The method as claimed in claim 10 or 11, wherein the metal part (140, 260, 360) contains 99% or more silicon by mass.
